# EUROPEAN PATENT APPLICATION

(11) **EP 1 467 515 A1**
(43) Date of publication of application: **13.10.2004**
(21) Application number: 02018771.2
(22) Date of filing: 22.08.2002
(51) Int. Cl.: H04L 12/24

(54) **Extending a template of a network management system**

(71) Applicant: Agilent Technologies Inc. a Delaware Corporation, Palo Alto, CA 94306 (US)
(72) Inventor: Nguyen, Trang, 71063 Sindelfingen (DE); Hipp, Christoph, 72401 Haigerloch (DE); Sarraf, Alain, 71083 Herrenberg (DE)
(74) Representative: Barth, Daniel

(57) **Abstract**

A method of extending a template of a network management system for operating a communication network is describe. Data is received by the network management system from the communication network relating to a network object or a network device or the like of a specific type. The network management system adapts a pre-configured information of a template corresponding to this type of network object or network device or the like depending on the received data.

## Description

### BACKGROUND OF THE INVENTION

The invention relates to a method of extending a template of a network management system for operating a communication network.

Network management systems are known on the market and are used e.g. for planning and documenting a communication network. These systems generally store information about all objects operating in the communication network. If a new device is introduced in the communication network, a new corresponding object has to be defined.

However, according to the prior art, the network management system only accepts known network elements as new objects. Unknown network elements are often not accepted or the created objects are not complete so that the created objects cannot be managed correctly or completely by the network management system.

### OBJECT AND ADVANTAGES OF THE INVENTION

It is an object of the invention to provide an improved network management system which allows a better processing of new network elements and their objects.

This object is solved by the method of claim 1. As well, the object is solved by the network management system of claim 5, the network interface of claim 6 and the communication network of claim 7.

The invention minimizes that a user must input any data defining a new object manually. Instead, that data which is received from the communication network is used by the invention to extend the corresponding template. Therefore, fewer effort is required to process new network elements and their objects. The invention provides an automatic discovery of new objects by an ongoing extension of the respective templates so that most of all new objects will be covered by that adapted template.

Further embodiments of the invention are provided in the dependent claims. In particular, it is emphasized that the invention may also be realized by a computer program or a computer program product which are able to execute the method of claim 1 when run on a data processing system.

### DETAILED DESCRIPTION OF EMBODIMENTS OF THE INVENTION

In a communication network, a large number of objects have to be planned, installed and managed. These objects may be, for example, inside plant elements such as buildings, floors and rooms for which the network to be managed is intended. Further objects may be racks or so-called cardcages, cards or modules or so-called plugins, as well as cables and other devices used to build up the network. A cardcage is a network element and a plugin is a network device associated with a particular cardcage. As well, the physical network connections or links are further objects of the network.

A database may be used to store these objects and a network management system documents and provides an infrastructure for managing a variety of network functions. Such functions may focus on planning, simulating, installing of networks, extending of existing networks, and managing the operations of a network such as preventive maintenance, solving network failures, route diversity management and so on.

As mentioned, the network management system is provided for planning and implementing or extending the communication network. As well, any change to the network, e.g. if a new cardcage or a new plugin is introduced, is supported by the network management system.

If new cardcages or new plugins are introduced to the communication network, corresponding new objects have to be created and stored in the network management system. For that purpose, respective templates are provided.

These templates hold pre-configured information on categories or types of network elements and their devices which are supported by the network management system. The templates must be present before data can be input. Often, the data is entered manually by the user via a graphical user interface tool or via a generic data import tool. As well, the data often has to be pre-manipulated such that specific constraints imposed by the network management system are met.

Another possibility is provided by some kind of semi-automatic discovery of a new object. In this case, the new cardcage or the new plugin comprises stored data which defines and identifies it. This data is forwarded to the network management system when the new cardcage or the new plugin is physically introduced in the communication network. The network management system then automatically fills in the respective template according to the received data.

The data defining the new cardcage or the new plugin may not only originate from the network objects and network devices themselves, but also e.g. from a different network management system which is integrated with the current network management system.

Furthermore, the following auto-discovery procedure is possible:

For each category or type of network elements and network devices, a template is provided in which no pre-configured information is filled in yet. Then, if a new cardcage or a new plugin is introduced, the corresponding template is used and data is filled into this template either automatically as described below or manually as described above.

For example, if a plugin is introduced into a specific slot, e.g. into slot no. 4 of a cardcage, this information is discovered by the network management system. Then, the network management system uses the template corresponding to the type of the plugin in order to create a new network device corresponding to the new plugin. As there are no further information present, the new network device does not comprise any further data.

As well, under the assumption that a network object corresponding to the cardcage is already existing, this network object relating to the cardcage is updated insofar that it comprises four slots and that the plugin is introduced into the slot no. 4.

Furthermore, the template corresponding to the type of the cardcage is adapted by adding the information that the cardcage comprises of four slots.

If, then, a new cardcage of the same type is discovered in the network, and if the network management system then uses the corresponding template to create a corresponding new network object, this template already comprises the information that the cardcage of this type comprises of four slots.

If, then, a plugin is introduced into slot no. 9 of this new cardcage, the above described procedure will be carried out again with the result that the template corresponding to the type of the cardcage is adapted again by adding the information that the cardcage comprises of nine slots.

With this procedure, the templates are adapted every time when new data is discovered within the network. This adoption is valid for all templates of all types of network objects and network devices and so on.

The following example shall outline the procedure once more:

If the network management system receives the data that a link is established with port no. 24 of a plugin of a specific type, the network management system checks whether the plugin is already known to it. If not, a link is created without connections. The information concerning the connections is internally stored but not established until the missing plugin has been auto-discovered.

If the plugin exists, the network management system checks whether the corresponding template contains information relating to the number of ports. If not or if the number of ports is smaller than 24, the network management system enters the information into the corresponding template that the network device has 24 ports. This information is present in the future if the template is used again for the creation of a new network device of this type.

As a result, network elements and network devices of any type may be imported into the network management system, independent of whether a template of the respective type already exists or not. If no template exists, a new template for this type is automatically created. If a template exists, the information in this template is extended based on the data coming in from the communication network.

As a further result, the templates are permanently extended if new cardcages and plugins are introduced so that the templates ― at least after some time ― comprise a number of pre-configured information which are sufficient for most new cardcages and plugins to be introduced.

A similar procedure may be carried out in connection with the handling of site locations. Three cases may be differentiated:
If a new object or a new device is discovered within the network and no site name is provided, then the corresponding network element or the network device is placed in a default site.
If the site name is provided but the geographical data of the site is unknown, then a corresponding site is created using the provided site name and the new network element or the new network device is placed in this new site. The user may then input the geographical data of the site at any time.
If the site name and the geographical data of the site are provided, then the network element or the network device is placed in the named site.
It is important to notice that - similar to the described templates - a default site may be created which will then receive a site name and corresponding geographical data in a later point in time.

## Claims

1. A method of extending a template of a network management system for operating a communication network, wherein data is received by the network management system from the communication network relating to a network object or a network device or the like of a specific type, and wherein the network management system adapts a pre-configured information of a template corresponding to this type of network object or network device or the like depending on the received data.

2. The method of claim 1 wherein the template is adapted such that its pre-configured information comprises the received data.

3. The method of claim 1 wherein default templates are provided for network objects or network devices or the like of an unknown type.

4. A computer program or a computer program product preferably stored on a data carrier, for executing the method of claim 1 when run on a data processing system such as a computer.

5. A network management system for extending a template for operating a communication network, wherein data is received by the network management system from the communication network relating to a network object or a network device or the like of a specific type, and wherein the network management system adapts a pre-configured information of a template corresponding to this type of network object or network device or the like depending on the received data.

6. An interface to a network management for extending a template for operating a communication network, wherein data is received by the network management system from the communication network relating to a network object or a network device or the like of a specific type, and wherein the network management system adapts a pre-configured information of a template corresponding to this type of network object or network device or the like depending on the received data.

7. A communication network comprising a network management system for operating the communication network and for extending a template, wherein data is received by the network management system from the communication network relating to a network object or a network device or the like of a specific type, and wherein the network management system adapts a pre-configured information of a template corresponding to this type of network object or network device or the like depending on the received data.
